## Europäisches Patentamt
## European Patent Office
## Office européen des brevets

(11) Numéro de publication : **0 036 790**
**B1**

(12) # FASCICULE DE BREVET EUROPÉEN

(45) Date de publication du fascicule du brevet :
13.06.84

(51) Int. Cl.³ : **C 09 D 11/02**

(21) Numéro de dépôt : 81400242.4

(22) Date de dépôt : 17.02.81

(54) **Liquide d'impression de grande stabilité destiné notamment à l'impression par jet d'encre.**

(30) Priorité : 21.03.80 FR 8006400

(43) Date de publication de la demande :
30.09.81 Bulletin 81/39

(45) Mention de la délivrance du brevet :
13.06.84 Bulletin 84/24

(84) Etats contractants désignés :
DE GB IT NL SE

(56) Documents cités :
CH-A- 466 207
IBM TECHNICAL DISCLOSURE BULLETIN vol. 18, no.
2, juillet 1975 NEW YORK (US) K.S. PENNINGTON et
al.: "Incorporation of hydrophobic materials in ordered molecular structures for use as inks or paints",
page 592
Ullmann Encyklopedie vol 10 (1975) page 455
Le dossier contient des informations techniques présentées postérieurement au dépôt de la demande et
ne figurant pas dans le présent fascicule.

(73) Titulaire : **I M A J E S.A.**
9, rue Gaspard Monge Z.A. de l'Armaillier
F-26500 Bourg les Valence (FR)

(72) Inventeur : **Le Pesant, Jean-Pierre**
THOMSON-CSF SCPI 173, bld Haussmann
F-75360 Paris Cedex 08 (FR)
Inventeur : **Tantot, Georges**
THOMSON-CSF SCPI 173, bld Haussmann
F-75360 Paris Cedex 08 (FR)

(74) Mandataire : **Dubreuil, Annie**
Cabinet DUBREUIL 7, rue de Keroman
F-56100 Lorient (FR)

## Description

L'invention concerne un liquide d'impression de grande stabilité destiné notamment à l'impression par jet d'encre, nécessitant l'utilisation de liquide d'impression fluide stable dans le temps.

Dans certaines applications des liquides d'impression de ce type et notamment dans le cas de l'impression par jet d'encre, il est nécessaire de faire passer l'encre à travers des orifices de faible diamètre, par exemple quelques dizaines de micromètres, afin d'obtenir par fractionnement du jet, des gouttes d'encre dont la projection sur un substrat permet d'obtenir des taches dont le diamètre peut être de l'ordre de 100 à 300 micromètres. Ceci est nécessaire, en particulier pour obtenir une densité élevée de points, caractérisée par le nombre de points par unité de longueur que l'on nomme résolution de l'impression.

La mise en œuvre de colorants hydrosolubles dont beaucoup comportent des groupements métallifères, pose généralement des problèmes de résistance à l'humidité des impressions. On utilise donc de préférence des colorants solubles en milieu organique.

L'utilisation d'orifices de faible diamètre évoquée ci-dessus ne suffit pas en elle-même à l'obtention des résolutions élevées recherchées. Il faut de plus que la disposition géométrique de ces orifices permette d'obtenir les résolutions recherchées sur l'ensemble de la surface à imprimer. Les faibles dimensions des orifices et le grand nombre de points recherché rendent généralement difficile la réalisation de telles dispositions géométriques lorsque chaque orifice ne permet d'imprimer qu'un seul point. Il est alors souvent avantageux de pouvoir imprimer plusieurs points avec chaque orifice. Ceci peut être obtenu d'une part en déplaçant le substrat d'impression et/ou les orifices, et en imposant aux gouttes émises par un même orifice des trajectoires variées.

Un moyen commode pour imposer aux gouttes des trajectoires différentes consiste en un transfert de charges électriques à ces gouttes et en une déflexion de ces gouttes chargées par un champ électrique. Le transfert de charges électriques ne peut être obtenu que si le liquide d'impression a une conductivité électrique suffisante. Ceci est en particulier le cas lorsque la durée de transfert des charges électriques est seulement de quelques microsecondes.

Un liquide d'impression plus souvent appelé encre dans la suite de la description doit être stable dans le temps, utilisable à tout moment pour former des jets de gouttelettes par passage à travers des orifices de faible diamètre de 5 à 100 micromètres. Ceci élimine généralement la possibilité d'utilisation de pigments colorés qui forment facilement des agrégats de taille suffisante pour entraîner un bouchage partiel ou total des orifices. Un tel liquide doit aussi conduire à l'obtention d'une conductivité électrique suffisante pour permettre le transfert aux gouttelettes d'une charge électrique au moment où elles se forment par détachement du jet. De plus, le séchage de l'impression doit être rapide, et sa résistance à l'humidité et au frottement suffisante. Enfin, ce liquide ou encore encre doit conduire, d'une part à l'obtention d'un contraste optique optimal ce qui nécessite l'utilisation de quantités de colorant qui peuvent être par exemple comprises entre 5 et 20 % en poids total, d'autre part à une limitation de l'étalement et de la diffusion du colorant sur et/ou dans le substrat pour obtenir une marque de dimension, de géométrie et de contraste optique bien définie et reproductible.

Il s'agit là de problèmes difficiles à résoudre d'autant plus que ces exigences sont confrontées à d'autres exigences contradictoires. Notamment, la conductivité devant être élevée, il est nécessaire d'utiliser des quantités d'eau relativement importantes afin d'assurer une bonne dissociation de l'électrolyte qui permet d'ajuster cette conductivité. Or, les colorants métallifères organosolubles (seuls capables de donner un contraste optique suffisant) ne supportent pas l'addition d'eau et il risque de se produire à plus ou moins longue échéance une floculation.

La présente invention a pour but de résoudre tous ces problèmes et concerne un liquide d'impression dont la composition assure une organisation des molécules constituantes telle que cette organisation contribue de façon déterminante à la stabilité dans le temps de ces liquides et évite en particulier la floculation d'un ou plusieurs constituants. Elle concerne plus particulièrement une microémulsion du type de celles qui sont décrites dans le document intitulé : « Ullmann Encyklopädie der Technischen Chemie » (vol. 10 (1975) page 455) mais obtenues sans l'aide d'un solubilisant et présentant par rapport à celles-ci des caractéristiques qui lui permettent de répondre aux critères exigés par l'application considérée, à savoir : la fabrication d'une encre pour imprimante. Elle concerne plus particulièrement un liquide d'impression destiné au procédé d'impression par jet d'encre faisant appel à des encres macroscopiquement homogènes et stables dans le temps ; caractérisé en ce que le choix des constituants conduit à l'établissement d'une première phase constituée d'un solvant très polaire, dite phase dispersante, d'une seconde phase constituée d'un solvant organique et d'un colorant dite phase dispersée, ces deux phases étant séparées par un film interfacial formé par un corps tensio-actif ; la phase dispersante étant constituée d'un premier groupe de composants compatibles entre eux, la phase dispersée étant également constituée d'un second groupe de constituants compatibles entre eux, le premier et le second groupe de constituants étant en revanche incompatibles entre eux ; l'ensemble se présentant sous la forme d'une microémulsion obtenue sans l'aide d'un solubilisant dans laquelle la phase dispersée se présente sous la forme de globules de dimensions comprises entre 500 et 1 000 Angström (50 et 100 nm).

L'invention sera mieux comprise à l'aide des explications qui vont suivre.

Conformément à l'invention, un liquide (ou encre) d'impression est constitué par un système physique conduisant à la séparation en deux parties dites phases des constituants de l'encre. La première phase est dite « dispersante » et la seconde phase est dite « dispersée ».

La phase dispersante contient un premier groupe de composants compatibles entre eux et la phase dispersée contient également un second groupe de composants compatibles entre eux, le premier et le second groupe de composants étant en revanche incompatibles entre eux. En fait, un tel liquide conforme à l'invention, se présente dans l'état de micro-émulsion ayant une phase dispersée composée de globules dont les dimensions sont comprises entre 500 à 1 000 Angström (50-100 nm) séparés de la phase dispersante par un film dit film interfacial dont la fonction est d'empêcher les constituants de chacune des phases normalement incompatibles en eux, d'interagir et de créer un phénomène de floculation. Une telle structure de l'encre conduit celle-ci à présenter une stabilité particulièrement remarquable.

Le choix des constituants permettant la formulation d'une encre selon l'invention, est défini en ce qu'il respecte, d'une part les contraintes liées à l'utilisation de cette encre, notamment pour l'impression par jet d'encre, et d'autre part en ce qu'il correspond à l'établissement de structures typiques de l'état micro-émulsion.

Dans une variante préférée de réalisation d'un liquide (encre) d'impression conforme à l'invention, le système physique mis en œuvre permet de séparer en deux phases les constituants de l'encre, à savoir :

— une première phase constituée d'un solvant très polaire tel que l'eau par exemple et éventuellement d'électrolyte,

— une seconde phase constituée d'un solvant organique et d'un colorant.

Dans les exemples décrits, cette première phase aqueuse constitue la phase dispersante de la micro-émulsion et la seconde phase, la phase dispersée. Ces deux phases sont, conformément à l'invention et comme cela a déjà été dit précédemment, séparées par un film interfacial. Il s'agit d'un corps contenant des molécules à caractère tensio-actif qui se localise essentiellement dans la couche interfaciale qui entoure chacun des globules de la phase dispersée et sépare leur contenu de l'autre phase dispersante. Ces corps tensio-actifs peuvent être ioniques comme par exemple le sodium dodécyl sulfate (SDS), ou non ioniques comme le Sunaptol qui est un nonylphénol éthoxylé fabriqué par la Société Ugine Kuhlmann. Dans le cas où le film interfacial contient des molécules à caractère tensio-actif anionique ou cationique, la micro-émulsion considérée présente intrinsèquement une forte conductivité électrique à l'échelle macroscopique pour certaines valeurs de concentration, conductivité qui pourra d'ailleurs être optimisée grâce à l'addition d'électrolyte comme cela sera expliqué ultérieurement.

Les colorants sont choisis de façon à être solubles de manière permanente dans la phase contenant les composés organiques. Il peut s'agir par exemple d'un colorant azoïque à complexe de chrome, commercialisé sous la dénomination ORASOL noir CN ou noir RL par la Société CIBA-GEIGY.

La région de solubilité maximale de ces colorants correspond à des corps ou mélanges moyennement polaires et à liaison hydrogène de force moyenne. En tant que solvants de ces colorants, les cétones légères sont particulièrement adaptées et de plus présentent l'avantage de conduire à des vitesses d'évaporation correctes. Il peut s'agir, par exemple, de cétones aliphatiques légères telles que la méthyléthylcétone (MEK), la méthylisobutylcétone (MIBK) ou la cyclohexanone.

Comme cela a déjà été dit précédemment, la structure des encres se présentant dans l'état de micro-émulsions conformément à l'invention, présente déjà par elle-même une conductivité non négligeable. Mais pour certaines applications, la valeur de celle-ci doit être augmentée, et de manière générale, ajustée en fonction d'un certain nombre de critères, notamment selon le type de fonctionnement des dispositifs d'utilisation de ce type d'encre. Pour obtenir ce résultat, on incorpore dans la phase aqueuse de l'émulsion, c'est-à-dire dans le cas considéré dans la phase dispersante, de faibles quantités d'électrolyte tel que par exemple du chlorure de dyméthylammonium (DMHC), des halogénures alcalins ou alcalino-terreux (LiCl, NaCl, CaCl$_2$) ou encore des acétates alcalins (sodium ou ammonium). Il faut noter que compte tenu du fait que l'état de micro-émulsion engendre par lui-même une certaine conductivité, les quantités d'électrolyte à mettre en œuvre sont faibles et c'est là un avantage appréciable.

Différentes compositions d'encres conformes à l'invention sont données dans le tableau I ci-après à titre d'exemple nullement limitatif. A chacune de ces compositions correspond une résistivité donnée en ohm-cm. Il existe deux sortes d'exemples, avec et sans l'utilisation de DMHC. Un premier type de ces liquides contient de façon nominale une proportion en poids de 45,0 % d'eau, de 5,8 % de SDS, de 35,4 % de MEK, de 13,8 % de noir ORASOL. Un second type de ces liquides contient de façon nominale 43,5 % d'eau, 39,3 % de MEK, 5,8 % de SDS, 1,0 % de DMHC et 10,4 % de noir ORASOL. Toutes ces proportions peuvent s'écarter de 10 % en valeur relative de la valeur nominale.

Tableau I

Les proportions sont données en poids et pour chaque exemple, la résistivité $\rho$ en ohm-cm est consignée.

| SDS | Eau | MEK | Colorants | DMHC | Ohm–cm |
|-----|-----|-----|-----------|------|--------|
| 6 | 43,6 | 35,1 | 15,1 | / | 160 |
| 5,7 | 46,5 | 37,4 | 10,3 | /- | 180 |
| 5,9 | 46,1 | 37,1 | 9,1 | 1,8 | 90 |
| 5,7 | 43,7 | 39,6 | 9,9 | 1,1 | 100 |
| 5,8 | 43,5 | 39,3 | 10,4 | 1,0 | 100 |

Dans certaines applications où une conductivité moyenne est suffisante, on peut réaliser des encres sous la forme de micro-émulsions selon l'invention, en utilisant un corps tensio-actif non ionique. Dans une première variante, le liquide d'impression contient de façon nominale une proportion en poids de 63,1 % d'eau, de 25,4 % de MIBK, de 6,3 % de Sunaptol et de 5,2 % de noir ORASOL CN. Ces proportions peuvent s'écarter de 10 % en valeur relative de la valeur nominale. Dans une seconde variante, le liquide d'impression contient de façon nominale une proportion en poids de 56 % d'eau, de 30,2 % de MIBK, de 13,2 % de Sunaptol et de 0,6 % de noir ORASOL CN. Quelle que soit la composition choisie, un tel système conforme à l'invention est macroscopiquement homogène et stable dans le temps et évite la précipitation des constituants. La phase dispersée est répartie en globules, comme cela a été dit précédemment. Ces globules sont de dimensions suffisamment faibles pour être en état de stabilité dynamique grâce en particulier, aux interactions physico-chimiques (tension interfaciale, énergie de courbure, force d'adsorption) et à l'énergie brownienne. Les faibles dimensions des globules permettent au système d'avoir un comportement homogène sur des éléments de volume supérieurs à quelques dixièmes de micromètres cubes.

Toutes ces qualités font que l'une des principales applications d'encre conforme à l'invention se situe dans le domaine de la technique d'impression par jet d'encre.

**Revendications**

1. Liquide d'impression destiné au procédé d'impression par jet d'encre faisant appel à des encres macroscopiquement homogènes et stables dans le temps ; caractérisé en ce que le choix des constituants conduit à l'établissement d'une première phase constituée d'un solvant très polaire, dite phase dispersante, d'une seconde phase constituée d'un solvant organique et d'un colorant dite phase dispersée, ces deux phases étant séparées par un film interfacial formé par un corps tensio-actif ; la phase dispersante étant constituée d'un premier groupe de composants compatibles entre eux, la phase dispersée étant également constituée d'un second groupe de constituants compatibles entre eux, le premier et le second groupe de constituants étant en revanche incompatibles entre eux ; l'ensemble se présentant sous la forme d'une microémulsion obtenue sans l'aide d'un solubilisant dans laquelle la phase dispersée se présente sous la forme de globules de dimensions comprises entre 500 et 1 000 Angström (50 et 100 nm).

2. Liquide d'impression selon la revendication 1, caractérisé en ce que le film interfacial contient des molécules à caractère tensio-actif de type anionique ou cationique.

3. Liquide d'impression selon la revendication 1, caractérisé en ce que le film interfacial contient des molécules à caractère tensio-actif non ionique.

4. Liquide d'impression selon la revendication 2, caractérisé en ce qu'il présente une conductivité électrique élevée à l'échelle macroscopique.

5. Liquide d'impression selon l'une des revendications précédentes, caractérisé en ce que le premier groupe de constituants compatibles entre eux contient un solvant très polaire.

6. Liquide d'impression selon la revendication 5, caractérisé en ce que ce solvant très polaire est de l'eau.

7. Liquide d'impression selon l'une des revendications 5 et 6, caractérisé en ce qu'il contient en outre un électrolyte.

8. Liquide d'impression selon l'une des revendications précédentes, caractérisé en ce que le second groupe de constituants comprend un solvant organique volatil incompatible avec le solvant polaire et un colorant soluble dans ce solvant organique.

9. Liquide d'impression selon l'une des revendications 7 et 8, caractérisé en ce que cet électrolyte est le chlorure de diméthylammonium.

10. Liquide d'impression selon l'une des revendications 7 et 8, caractérisé en ce que cet électrolyte est un acétate de sodium ou d'ammonium.

11. Liquide d'impression selon l'une des revendications 8 à 10, caractérisé en ce que le solvant organique volatil est une cétone aliphatique légère.

4

12. Liquide d'impression selon la revendication 11, caractérisé en ce que cette cétone est la méthyléthylcétone.

13. Liquide d'impression selon la revendication 11, caractérisé en ce que cette cétone est la méthylisobutylcétone.

14. Liquide d'impression selon la revendication 11, caractérisé en ce que cette cétone est la cyclohexanone.

15. Liquide d'impression selon l'une des revendications 8 à 14, caractérisé en ce que le colorant est un colorant noir azoïque à complexe de chrome.

16. Liquide d'impression selon la revendication 2, caractérisé en ce que le film interfacial est constitué de sodium dodécyl-sulfate.

17. Liquide d'impression selon la revendication 3, caractérisé en ce que le film interfacial est un nolylphénol éthoxylé.

18. Liquide d'impression selon l'une des revendications 6, 12, 15 et 16, caractérisé en ce qu'il contient de façon nominale une proportion en poids de 45,0 % d'eau, de 5,8 % de sodium dodecyle-sulfate, de 35,4 % de méthyléthylcétone, de 13,8 % de noir, ces proportions pouvant s'écarter de 10 % en valeur relative de la valeur nominale.

19. Liquide d'impression selon l'une des revendications 6, 9, 12, 15 et 16, caractérisé en ce qu'il contient de façon nominale une proportion en poids de 43,5 % d'eau, de 39,3 % de méthyléthylcétone, 5,8 % de SDS, 1,0 % de diméthylammonium et de 10,4 % de noir, ces proportions pouvant s'écarter de 10% en valeur relative de la valeur nominale.

20. Liquide d'impression selon l'une des revendications 6, 13, 15 et 17, caractérisé en ce qu'il contient de façon nominale une proportion en poids de 63,1 % d'eau, de 25,4 % de méthylisobutylcétone, de 6,3 % de nonylphénol éthoxylé et de 5,2 % de noir, ces proportions pouvant s'écarter de 10 % en valeur relative de la valeur nominale.

21. Liquide d'impression selon l'une des revendications 6, 13, 15 et 17, caractérisé en ce qu'il contient de façon nominale une proportion en poids de 56 % d'eau, de 30,2 % de méthylisobutylcétone, de 13,2 % de nonylphénol éthoxyle et de 0,6 % de noir, ces proportions pouvant s'écarter de 10 % en valeur relative de la valeur nominale.

## Claims

1. Printing liquid intended for the ink jet printing process making use of inks which are macroscopically homogenous and stable in time ; characterised in that the choice of the constituants leads to the forming of a first phase consisting of a very polar solvent, referred to as a dispersing phase, of a second phase formed by an organic solvent and a colourant, referred to as a dispersed phase, these two phases being separated by an interfacial film formed by a substance having a surface-tension effect ; the dispersing phase being formed by a first group of mutually compatible components, the dispersed phase equally being formed by a second group of mutually compatible components, the first and second groups of components being on the other hand incompatible with each other ; the whole appearing in the form of a micro-emulsion obtained without the assistance of a solubiliser in which the dispersed phase occurs in the form of globules of a size comprised between 500 and 1,000 Angström (50 and 100 nm).

2. Printing liquid according to claim 1, characterised in that the interfacial film contains molecules having a surface-tension effect of the anionic or cationic type.

3. Printing liquid according to claim 1, characterised in that the interface film contains molecules having a non-ionic surface-tension effect.

4. Printing liquid according to claim 2, characterised in that it has an electrical conductivity raised to the macroscopic scale.

5. Printing liquid according to any one of the preceding claims, characterised in that the first group of mutually compatible components contains a very polar solvent.

6. Printing liquid according to claim 5, characterised in that this very polar solvent is water.

7. Printing liquid according to claim 5 or 6, characterised in that it also contains an electrolyte.

8. Printing liquid according to any one of the preceding claims, characterised in that the second group of components comprises a volatile organic solvent incompatible with the polar solvent and a colourant soluble in this organic solvent.

9. Printing liquid according to claim 7 or 8, characterised in that this electrolyte is dimethylammonium chloride.

10. Printing liquid according to claim 7 or 8, characterised in that this electrolyte is a sodium or ammonium acetate.

11. Printing liquid according to claim 8, 9 or 10, characterised in that the volatile organic solvent is a light aliphatic ketone.

12. Printing liquid according to claim 11, characterised in that this ketone is methylethyl ketone.

13. Printing liquid according to claim 11, characterised in that this ketone is methylisobutyl ketone.

14. Printing liquid according to claim 11, characterised in that this ketone is cyclohexanone.

15. Printing liquid according to any one of claims 8 to 14, characterised in that the colourant is an azo black colourant comprising a chromium complex.

16. Printing liquid according to claim 2, characterised in that the interface film is formed by sodium dodecyl sulphate.

17. Printing liquid according to claim 3, characterised in that the interface film is an ethoxy nonylphenol.

18. Printing liquid according to any one of claims 6, 12, 15 and 16, characterised in that it contains in nominal manner a proportion by weight of 45 % of water, of 5.8 % of sodium dodecyl sulphate, of 35.4 % of methylethyl ketone, of 13.8 % of black, these proportions being able to vary by 10 % in relative value from the nominal value.

19. Printing liquid according to any one of claims 6, 9, 12, 15 and 16, characterised in that it contains in nominal manner a proportion by weight of 43.5 % of water, of 39.3 % of methylethyl ketone, 5.8 % of sodium dodecyl sulphate, 1.0 % of dimethylammonium and 10.4 % of black, these proportions being able to vary by 10 % in relative value from the nominal value.

20. Printing liquid according to any one of claims 6, 13, 15 and 17, characterised in that it contains in nominal manner a proportion by weight of 63.1 % of water, of 25.4 % of methylisobutyl ketone, of 6.3 % of ethoxy nonylphenol and 5.2 % of black, these proportions being able to vary by 10 % in relative value from the nominal value.

21. Printing liquid according to any one of claims 6, 13, 15 and 17, characterised in that it contains in nominal manner a proportion by weight of 56 % of water, of 30.2 % of methylisobutyl ketone, of 13.2 % of ethoxy nonylphenol and of 0.6 % of black, these proportions being able to vary by 10 % in relative value from the nominal value.

## Ansprüche

1. Druckflüssigkeit für Tintenstrahl-Druckverfahren, die sich makroskopisch homogener und zeitbeständiger Tinten bedienen, dadurch gekennzeichnet, daß die Wahl der Bestandteile zur Ausbildung einer ersten Phase, die durch ein sehr polares Lösungsmittel gebildet wird und dispergierende Phase genannt wird, sowie zur Ausbildung einer zweiten Phase führt, die aus einem organischen Lösungsmittel und einem Färbemittel gebildet wird und dispergierte Phase genannt wird, wobei diese beiden Phasen durch einen aus einem grenzflächenaktiven Körper gebildeten Frenzflächenfilm voneinander getrennt sind und wobei die dispergierende Phase aus einer ersten Gruppe von untereinander verträglichen Komponenten und die dispergierte Phase in gleicher Weise aus einer zweiten Gruppe von untereinander verträglichen Komponenten aufgebaut sind, wobei dagegen die erste und die zweite Gruppe von Komponenten untereinander unverträglich sind, sowie dadurch, daß das Ganze die Form einer Mikroemulsion aufweist, die ohne Hilfe eines Solubilisierungsmittels erhalten wurde und in der die dispergierte Phase in Form von Kügelchen mit Abmessungen von zwischen 500 und 1 000 Angström (50 und 100 nm) vorliegt.

2. Druckflüssigkeit nach Anspruch 1, dadurch gekennzeichnet, daß der Grenzflächenfilm Moleküle mit grenzflächenaktiven Eigenschaften vom anionischen oder kationischen Typ enthält.

3. Druckflüssigkeit nach Anspruch 1, dadurch gekennzeichnet, daß der Grenzflächenfilm Moleküle mit nichtionischen, grenzflächenaktiven Eigenschaften enthält.

4. Druckflüssigkeit nach Anspruch 2, dadurch gekennzeichnet, daß sie eine in makroskopischem Maßstab hohe elektrische Leitfähigkeit aufweist.

5. Druckflüssigkeit nach einem der vorhergehenden Ansprüche, dadurch gekennzeichnet, daß die erste Gruppe von untereinander verträglichen Komponenten ein sehr polares Lösungsmittel enthält.

6. Druckflüssigkeit nach Anspruch 5, dadurch gekennzeichnet, daß das sehr polare Lösungsmittel Wasser ist.

7. Druckflüssigkeit nach einem der Ansprüche 5 oder 6, dadurch gekennzeichnet, daß sie zusätzlich einen Elektrolyten enthält.

8. Druckflüssigkeit nach einem der vorhergehenden Ansprüche, dadurch gekennzeichnet, daß die zweite Gruppe von Komponenten ein flüchtiges, mit dem polaren Lösungsmittel unverträgliches organisches Lösungsmittel und ein in diesem organischen Lösungsmittel lösliches Färbemittel umfaßt.

9. Druckflüssigkeit nach einem der Ansprüche 7 oder 8, dadurch gekennzeichnet, daß der Elektrolyt Dimethylammoniumchlorid ist.

10. Druckflüssigkeit nach einem der Ansprüche 7 oder 8, dadurch gekennzeichnet, daß der Elektrolyt Natrium-oder Ammoniumacetat ist.

11. Druckflüssigkeit nach einem der Ansprüche 8 bis 10, dadurch gekennzeichnet, daß das flüchtige organische Lösungsmittel ein leichtes aliphatisches Keton ist.

12. Druckflüssigkeit nach Anspruch 11, dadurch gekennzeichnet, daß das Keton Methyläthylketon ist.

13. Druckflüssigkeit nach Anspruch 11, dadurch gekennzeichnet, daß das Keton Methylisobutylketon ist.

14. Druckflüssigkeit nach Anspruch 11, dadurch gekennzeichnet, daß das Keton Cyclohexanon ist.

15. Druckflüssigkeit nach einem der Ansprüche 8 bis 14, dadurch gekennzeichnet, daß das Färbemittel ein schwarzer Chromkomplexazofarbstoff ist.

16. Druckflüssigkeit nach Anspruch 2, dadurch gekennzeichnet, daß der Grenzflächenfilm aus Natriumdodecylsulfat gebildet ist.

17. Druckflüssigkeit nach Anspruch 3, dadurch gekennzeichnet, daß der Grenzflächenfilm ein äthoxyliertes Nonylphenol ist.

18. Druckflüssigkeit nach einem der Ansprüche 6, 12, 15 oder 16, dadurch gekennzeichnet, daß sie nominal einen Gewichtsanteil von 45,0 % Wasser, 5,8 % Natriumdodecylsulfat, 35,4 % Methyläthylketon, 13,8 % Schwarz enthält, wobei diese Anteile um 10 % vom Nominalwert abweichen können.

19. Druckflüssigkeit nach einem der Ansprüche 6, 9, 12, 15 oder 16, dadurch gekennzeichnet, daß sie nominal einen Gewichtsanteil von 43,5 % Wasser, 39,3 % Methyläthylketon, 5,8 % SDS, 1,0 % Dimethylammoniumchlorid und 10,4 % Schwarz enthält, wobei diese Anteile um 10 % vom Nominalwert abweichen können.

20. Druckflüssigkeit nach einem der Ansprüche 6, 13, 15 oder 17, dadurch gekennzeichnet, daß sie nominal einen Gewichtsanteil von 63,1 % Wasser, 25,4 % Methylisobutylketon, 6,3 % äthoxyliertes Nonylphenol und 5,2 % Schwarz enthält, wobei diese Anteile um 10 % vom Nominalwert abweichen können.

21. Druckflüssigkeit nach einem der Ansprüche 6, 13, 15 oder 17, dadurch gekennzeichnet, daß sie nominal einen Gewichtsanteil von 56 % Wasser, 30,2 % Methylisobutylketon, 13,2 % äthoxyliertes Nonylphenol und 0,6 % Schwarz enthält, wobei diese Anteile um 10 % vom Nominalwert abweichen können.